(19) Europäisches Patentamt
European Patent Office
Office européen des brevets

(11) Publication number: **0 331 209 B1**

# (12) EUROPEAN PATENT SPECIFICATION

(45) Date of publication of patent specification: **25.11.92**

(51) Int. Cl.5: **G02F 1/17**, C10M 103/06, C10M 125/20

(21) Application number: **89105830.7**

(22) Date of filing: **05.04.84**

(60) Publication number of the earlier application in accordance with Art.76 EPC: **0 122 559**

## (54) Electrochromic material.

(30) Priority: **18.04.83 JP 68130/83**
**22.07.83 JP 133779/83**
**03.02.84 JP 18876/84**

(43) Date of publication of application:
**06.09.89 Bulletin 89/36**

(45) Publication of the grant of the patent:
**25.11.92 Bulletin 92/48**

(84) Designated Contracting States:
**BE DE FR GB IT NL**

(56) References cited:
**WO-A-82/03697**
**US-A- 3 704 057**
**US-A- 3 829 196**

(73) Proprietor: **DAICEL CHEMICAL INDUSTRIES CO., LTD.**
**1-banchi, Teppo-cho**
**Sakai-shi Osaka 590(JP)**

(72) Inventor: **Hattori, Makoto**
**5-804, Hijiy-cho 2-chome Minami-ku**
**Hiroshima-shi Hiroshima(JP)**
Inventor: **Yamanaka, Shoji**
**1-11-302 Ushida Honmachi 6-chome Higashi-ku**
**Hiroshima-shi Hiroshima(JP)**

(74) Representative: **Patentanwälte Grünecker, Kinkeldey, Stockmair & Partner**
**Maximilianstrasse 58**
**W-8000 München 22(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an electrochromic display member which comprises a thin layer of electrochromic material formed into a film and deposited on a transparent conductive electrode thereby to form an electrochromic electrode of said electrochromic display member.

US-A-3704057 discloses an electrochromic display member which comprises a transparent electroconductive electrode, an electrolyte containing lithium ions therein and a counter electrode.

US-A-3829196 discloses a variable light transmission device comprising a transition metal oxide layer sandwiched between a pair of electrode layers such as stannic oxide-coated glass and gold film.

It is the object of the present invention to provide an improved electrochromic display member. Said object is achieved by an electrochromic display member which comprises a thin layer of electrochromic material formed into a film and deposited on a transparent conductive electrode thereby to form an electrochromic electrode of said electrochromic display member, said layer of electrochromic material in contact with an electrolyte containing lithium ions therein, said electrolyte being disposed between said electrochromic electrode and a counter electrode, such that DC voltage applied on said electrodes causes a change in coloration of said electrochromic electrode, characterized in that said electrochromic material is a layered compound of β-ZrNX in which X is chlorine, bromine or a solid solution of chlorine and bromine.

Fig. 1 shows a schematic sectional view of an ECD cell of a display member of the present invention wherein 1 is a transparent conductive electrode and 2 is a film of β-ZrNX. Fig. 2 is an illustration of the layered structure to be used in the invention. Figs. 3 and 4 each indicate a reactor unit used in the process of preparing β-ZrNX in which 21 is a quartz tube, 22 is an inlet tube for carrier gas and 23 is an electric furnace. Figs. 5 and 6 show X-ray diffraction patterns of the compounds obtained in preparation Examples 1 and 3, respectively.

In the following the invention is further illustrated regarding the process for preparing β-ZrNX, and the process for preparing the electrochromic display member.

<u>Process for Preparation of β-ZrNX</u>

The following three methods for preparing the layered crystals have been hitherto known.

(1) A method utilizing a gas/gas reaction in which $ZrCl_4$ vapor and ammonia gas are reacted at elevated temperatures (Yogyo Kyokaishi, <u>85</u>, 173 (1977) and Bull. Chem. Soc. Japan, <u>56</u>, 2638 (1953).

(2) A method utilizing a solid/gas reaction in which solid phase $ZrCl_4$ or $ZrBr_4$ is reacted with ammonia gas at 300 to 350° C to obtain α-ZrNC1 or α-ZrNBr, which is then reacted in an ammonia stream at 650° C to β-ZrNC1 or βrNBr (Z. Anorg. Allg. Chem., <u>332</u>, 159 (1964)).

(3) A method in which metallic zirconium and zirconium nitride are reacted with ammonium chloride at elevated temperature (1000 to 1500° C) under elevated pressure 3 to 4 GPa (30 to 40 kbar)) (Khim., <u>16</u> -(2), 246-8 (1975)).

However, $ZrCl_4$ and $ZrBr_4$ used in methods (1) and (2) as a starting material are highly hygroscopic and liable to be hydrolyzed, thereby making these two methods troublesome and furthermore making it very difficult to avoid contamination of the product with a hydrolyzate, i.e. $ZrO_2$. In addition, in method (1), $ZrCl_4 \cdot 2NH_3$ and α-ZrNCl may be formed as byproducts at low temperatures while $Zr_3N_4$ and ZrN may be formed as byproducts at high temperatures, so that it is impossible to obtain β-ZrNCl in a pure state.

Although there has been no report describing the synthesis of B-ZrNCl by method (1), it may also be difficult to obtain β-ZrNBr in a high purity by analogy with the difficulty in the synthesis of β-ZrNCl with this method.

According to method (2), it is possible to obtain β-ZrNCl or β-ZrNBr in a quite high purity by a careful operation, although some contamination with $ZrO_2$ is observed. However $ZrCl \cdot 2NH_3$ may also be formed by the reaction of $ZrCl_4$ with $NH_3$ and removed by sublimation, resulting in a lower yield, i.e. 30 to 40% (Yogyo Kiso Toron, 1984).

Method (3) is advantageous because of the absence of the hygroscopic $ZrCl_4$. However, the elevated temperature and pressure require a large-scale apparatus so that this method cannot be used generally.

Under these circumstances, we have found a process for preparing industrially useful β-ZrNX in a high purity and high yield.

The process for preparing the layered compound of β-ZrNX,
wherein X represents Cl, Br or a solid solution of Cl and Br, to be used in the display member of the present invention comprises reacting zirconium hydride ($ZrH_x$; wherein $0<x\leqq 2$) and/or metallic zirconium with ammonium chloride and/or ammonium bromide.

Zirconium hydride ($ZrH_x$; wherein $0<x\leqq 2$) and metallic zirconium to be used in this invention may be in

any form such as a powder, granules or a plate. Said zirconium hydride (ZrHx; wherein $0 < x \leqq 2$) or metallic zirconium is usually heated to 400 to 800° C and then allowed to react with ammonium chloride or ammonium bromide. This reaction is carried out by supplying gaseous ammonium chloride, ammonium bromide or a mixture thereof to the heated zirconium hydride ($ZrH_x$; wherein $0<x\leqq2$) or metallic zirconium by using ammonia gas or an inert gas as a carrier gas. In this reaction, β-ZrNCl can be quantitatively obtained by using ammonium chloride, while α-ZrNBr can be obtained by using ammonium bromide. The obtained α-ZrNBr may be converted into β-ZrNBr by sealing in vacuo and heating to 550 to 900° C for 5 to 40 h.

The obtained β-ZrNCl may be heated in a similar manner to obtain β-ZrNCl having a higher crystallinity. The addition of a small amount of $ZrCl_4$ or $ZrBr_4$ during the thermal treating period may enhance the effect. However, it is not always necessary to add $ZrBr_4$.

Ammonia gas is most suitably used as a carrier gas in the aforementioned reaction. However any other gas such as He, Ar or $N_2$ may be used unless it adversely affects the reaction. By the use of $NH_3$, the reaction proceeds in a remarkably short period to give β-ZrNCl or α-ZrNBr quantitatively. Gaseous ammonium chloride or ammonium bromide being used in the reaction may be obtained by subliming solid ammonium chloride or ammonium bromide. Alternatively, it is possible to prepare these gaseous compounds by blowing ammonia gas and hydrogen chloride or hydrogen bromide gas simultaneously into a reaction zone and mixing. It is preferable to use excess ammonia gas.

Electrochromic Display member

In an electrochromic display (hereinafter abbreviated as ECD), an oxidation or reduction reaction on a transparent display electrode caused by impressing a DC voltage results in coloration of said electrode, thereby forming a colored pattern. Impression of a reverse voltage results in a reverse reaction to decolorize the colored pattern. An ECD having the aforementioned coloring-decoloring mechanism has attracted wide attention because of the following advantages as compared with conventional liquid crystals which have been used as a light-receiving display device capable of affording a clear display in the light: requiring only a similar electrical power to liquid crystals; exhibiting no dependence on an visual angle; affording a clear color display; having a memory function; working in a wide temperature range; capable of affording a wide display.

Representative examples of electrochromic materials which have been proposed are organic compounds such as viologen derivatives (4,4'-bipyridine derivatives) and inorganic compounds such as tungsten oxide ($WO_3$), molybdenum oxide ($MoO_3$) or iridium oxide ($Ir(OH)_n$).

An ECD in which viologen derivatives are used has some advantages such as a high response speed and capability of polychroic display by altering the substituents. However the redox reaction is accompanied with a side reaction resulting in an irreversible state to thereby leave a contaminant on the electrode to lower the display quality. Therefore this type of ECD's has not reached a practical level as yet.

Electrochromic materials based on inorganic compounds, particularly $WO_3$, have been used in practice today. An ECD in which $WO_3$ is used as a display electrode takes advantage of the change of $WO_3$ from colorless into blue by a reducing reaction. However the contrast of the blue color in a colored state is yet unsatisfactory.

As described above, it has been demanded to obtain an electrochromic material capable of affording a clear contrast and displaying various colors. As a result of our investigations, we have found an excellent electrochromic material which changes from colorless or yellow to black by impressing a voltage on an electrode in a reduced state and reverts to colorless or yellow by impressing a voltage in a reverse direction.

When a voltage is impressed on β-ZrNX to induce a reducing reaction, lithium atoms are intercalated in between the layers of the β-ZrNX to form black $Li_xZrNX$, as shown in formula (1).

$$ZrNX + xLi^{+} + Xe^{-} \rightleftharpoons Li_{x}ZrNX \qquad (1)$$

colorless or yellow — black

Then, by impressing a voltage in a reverse direction to induce an oxidizing reaction, the lithium atoms

present between the layers of the β-ZrNX are liberated to revert to the original colorless or yellow state. This reaction proceeds reversibly by altering the electrical potential to give oxidized and reduced states alternately. This reversible reaction results in a reversible color change of the electrode.

This invention provides an ECD device with a remarkably clear contrast by the use of β-ZrNX showing the above reversibility as a display electrode material of the ECD.

The β-ZrNX used in the present invention may be prepared by reacting zirconium tetrachloride or tetrabromide in an ammonia stream at 300 to 400 °C to obtain α-ZrNX and converting the obtained α-ZrNX to a β-form by heating to 500 to 650 °C. The obtained β-ZrNX is formed into a film and provided on a transparent conductive electrode to thereby form an electrochromic electrode of ECD.

Examples of the transparent conductive electrode to be used to form the electrochromic display device of the present invention are glass or plastic films coated for example, with $SnO_2$, $In_2O_3$ or Au. A β-ZrNCl film may be formed on said transparent conductive electrode by applying β-ZrNCl powder with a binder such as polyvinyl alcohol, vacuum metallizing or ion sputtering.

The electrochromic display device thus obtained may be encapsulated in an ECD cell as shown in Fig. 1, wherein reference numeral 1 represents a transparent conductive electrode, 2 represents a β-ZrNCl film provided on the electrode 1, 3 represents a spacer, 4 represents a counter-electrode and 5 represents an electrolyte.

Any material may be used as the counter-electrode as long as it undergoes an electrode reaction with the display electrode used in the present invention. Examples of said material are platinum, gold, carbon, indium oxide, tungsten oxide, tin oxide, silver and lithium.

Examples of the electrolyte are an aqueous solution of LiCl or $LiClO_4$, an organic electrolyte prepared by dissolving $LiClO_4$ in an organic solvent such as propylene carbonate or acetonitrile, and a solid electrolyte.

Impression of a DC voltage on an ECD device composed as shown in Fig. 1 to realize a negative display electrode causes a rapid color change from colorless or yellow to black. Then the impression of a voltage in a reverse direction converts the black display device to colorless or yellow immediately. The ECD device of the present invention has a long repeating life and a stable memory function.

In addition, the electrochromic material used in the present invention may be used in a shutter of a camera or an optical printer by taking advantage of the electrochemical redox reaction which causes the color to change from colorless to black.

The invention will be illustrated in detail by the following examples.

Preparation Example 1

A manufacturing device unit as shown in Fig. 3 was used. A and B each indicate a heating zone. Ammonia gas was passed through the unit as a carrier gas at a rate of 50 ml/min. 1.227 g of $NH_4Cl$ and 0.2989 g of a metallic zirconium plate were placed in zones A and B, respectively, and allowed to react for 2 h at 650 °C to afford 0.2959 g of a pale yellowish green powdery product in zone B. This produce was identified as β-ZrNCl by X-ray diffractometry. Fig. 5 is an X-ray diffraction pattern of the product. Yield: 64.2%.

Preparation Example 2

$NH_3$ gas was passed through a unit containing 0.3106 g of $ZrH_2$ in the heating zone and similar to that used in Preparation Example 1 at a rate of 200 ml/min for 1 h to replace the atmosphere with ammonia. Subsequently $NH_3$ gas was passed at a rate of 50 ml/min while raising the temperature to 400 °C. Then HCl gas was passed at a rate of 25 ml/min while the temperature was still continuously raised. When the temperature reached 650 °C, these materials were allowed to react for 30 min to give 0.4024 g of a pale yellowish green powdery product. The X-ray diffraction pattern of the product was similar to that of Preparation Example 1, indicating that it was β-ZrNCl. Yield: 85.9%.

Preparation Example 3

A gaseous mixture of $N_2$ and $NH_3$ was passed through a unit containing 7.551 g of $NH_4Br$ in zone A and 1.027 g of $ZrH_2$ in Zone B and similar to that used in Preparation Example 1 at 650 °C to obtain a yellow powder in zone B. The X-ray diffraction pattern of the powder showed that it was α-ZrNBr. The obtained α-ZrNBr was sealed in a quartz tube in vacuo and heated to 850 °C in an electric furnace for 24 h to obtain 1.544 g of a pale yellowish green crystalline product. The product was identified as β-ZrNBr by X-ray diffractometry. Yield: 75.7%. Fig. 6 is an X-ray diffraction pattern of the product.

Preparation Example 4

Ammonia gas was passed through a unit as shown in Fig. 4 as a carrier gas at a rate of 50 ml/min. 1.251 g of $NH_4Cl$ was placed in zone A while 0.3115 g of $ZrH_2$ was placed in zone B. Then zones A and B were heated to 400 °C and to 650 °C, respectively for the reaction to obtain 0.3526 g of a powdery pale yellowish green product in zone B. The X-ray diffraction pattern of the product was similar to that of Preparation Example 1, showing that it was β-ZrNCl. Yield : 76.5%.

Preparation Example 5

$N_2$ gas was passed through a unit similar to that used in Preparation Example 4 as a carrier gas. 1.216 g of $NH_4Cl$ was placed in zone A while 0.3028 g of $ZrH_2$ was placed in zone B. Then zones A and B were heated to 400 °C and to 650 °C, respectively, for the reaction to obtain 0.3122 g of a pale yellowish green powdery product in zone B. The obtained product was identified as β-ZrNCl by X-ray diffractometry similar to Preparation Example 1. Yield: 68.3%.

Example

$ZrCl_4$ was allowed to react in an $NH_3$ stream at 350 °C in an electric furnace to give α-ZrNCl. The obtained α-ZrNCl was converted into β-ZrNCl by heating to 600 °C. The obtained β-ZrNCl was admixed with a 1% aqueous solution of polyvinyl alcohol, applied on a transparent electrode ($SnO_2$) and dried at 120 °C for 12 h to form a display electrode. An ECD cell as shown in Fig. 1 was constructed by using a platinum counter-electrode and a 1 mol/l solution of $LiClO_4$ in tetrahydrofuran as an electrolyte. A DC pulse voltage altering from +3.0 V to -3.9 V at a pulse period of 10 s was impressed on both ends of the cell. The color of the display electrode changed to black at -3.9 V and it reverted to yellow at +3.0 V. The coloring-decoloring process thereof was very definite, thereby affording a clear contrast. The coloring-decoloring cycle could be repeated $10^2$ times with no trouble.

## Claims

1. An electrochromic display member which comprises a thin layer of electrochromic material formed into a film (2) and deposited on a transparent conductive electrode (1) thereby to form an electrochromic electrode of said electrochromic display member, said layer of electrochromic material in contact with an electrolyte (5) containing lithium ions therein, said electrolyte being disposed between said electrochromic electrode and a counter electrode (4), such that DC voltage applied on said electrodes causes a change in coloration of said electrochromic electrode, **characterized in that** said electrochromic material is a layered compound of β-ZrNX in which X is chlorine, bromine or a solid solution of chlorine and bromine.

## Patentansprüche

1. Elektrochromieanzeige, welche eine dünne Schicht aus einem elektrochromen Material umfaßt, das zu einer Folie (2) geformt und auf einer transparenten leitfähigen Elektrode (1) abgeschieden ist, um dadurch eine elektrochrome Elektrode der Elektrochromieanzeige zu bilden, wobei die Schicht aus dem elektrochromen Material in Kontakt mit einem Elektrolyten (5), enthaltend Lithiumionen, ist, der Elektrolyt zwischen der elektrochromen Elektrode und einer Gegenelektrode (4) derart angeordnet ist, daß auf die Elektroden angelegte Gleichspannung eine Farbänderung der elektrochromen Elektrode bewirkt, **dadurch gekennzeichnet,** daß das elektrochrome Material eine geschichtete Verbindung aus β-ZrNX ist, worin X Chlor, Brom oder eine feste Lösung aus Chlor und Brom ist.

## Revendications

1. Elément d'affichage électrochromique comprenant une fine couche de matériau électrochromique sous forme de pellicule (2) et déposée sur une électrode conductrice transparente (1) pour former une électrode électrochromique dudit élément d'affichage électrochromique, ladite couche de matériau électrochromique en contact avec un électrolyte (5) contenant des ions lithium, ledit électrolyte étant

disposé entre ladite électrode électrochromique et une contre-électrode (4), tel qu'une tension continue appliquée sur lesdites électrodes provoque un changement de la coloration de ladite électrode électrochromique, caractérisé en ce que ledit matériau électrochromique est un composé en couches de $\beta$-ZrNX dans lequel X est le chlore, le brome, ou une solution solide de chlore et de brome.

Fig. 1

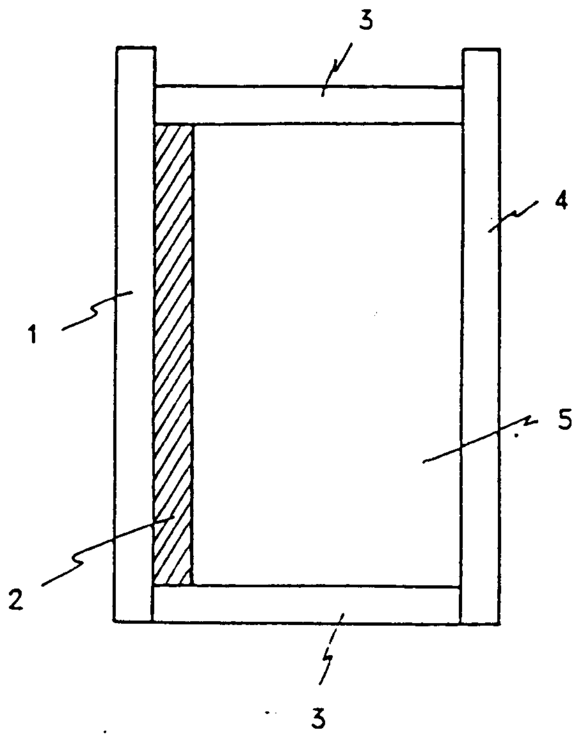

Fig. 2

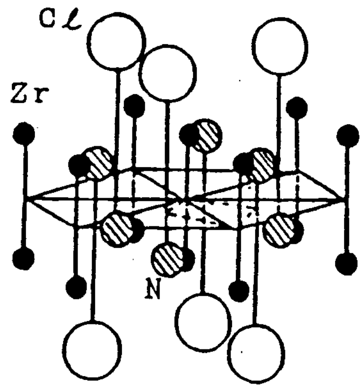

Fig. 3

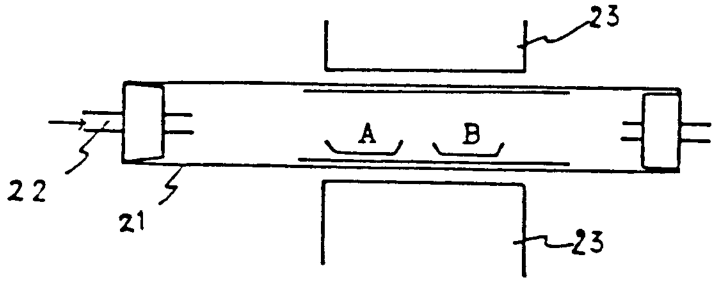


Fig. 4

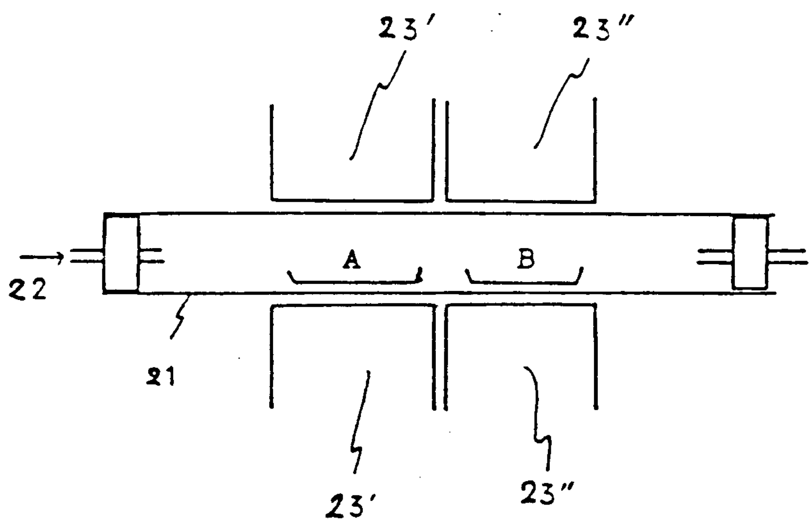

Fig. 5

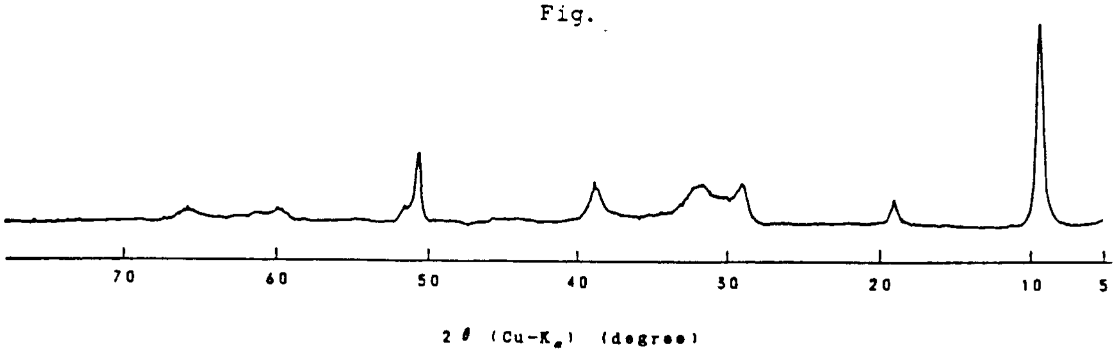
70
60
50
40
30
20
10
5
2 θ (Cu-Kα) (degree)

Fig. 6

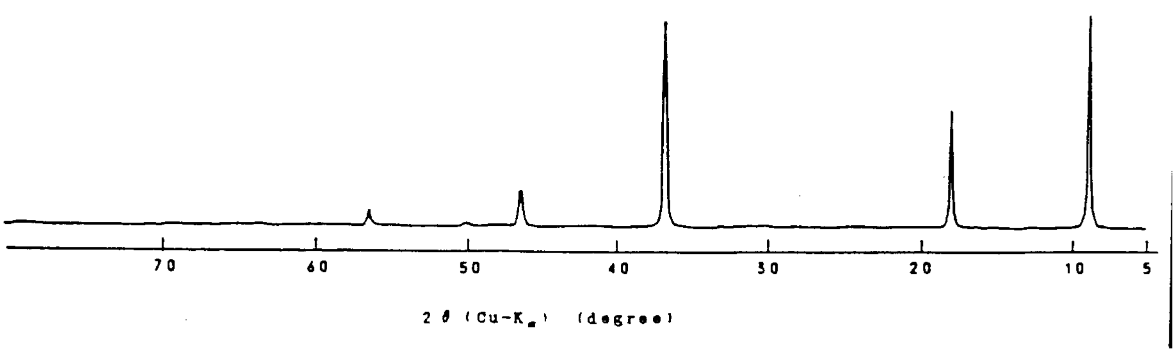
70
60
50
40
30
20
10
5
2 θ (Cu-Kα) (degree)